# EUROPEAN PATENT APPLICATION

(11) **EP 1 630 045 A1**
(43) Date of publication of application: **01.03.2006**
(21) Application number: 05014879.0
(22) Date of filing: 08.07.2005
(51) Int. Cl.: B60R 21/16

(54) **Occupant protection system including an airbag and a curtain sheet**

(30) Priority: 31.08.2004 JP 2004252630
(71) Applicant: TAKATA CORPORATION, Minato-ku, Tokyo 106-8510 (JP)
(72) Inventor: Kosugi, Noriyuki, Tokyo 106-8510 (JP); Noguchi, Atsushi, Tokyo 106-8510 (JP); Takedomi, Akifumi, Tokyo 106-8510 (JP)
(74) Representative: Vossius & Partner

(57) **Abstract**

To provide an occupant protection system that can effectively protect an occupant, for example, in the event of a side collision or turning on the side and that can be stored in a reduced space of a vehicle.

When a car including a side air bag device 20 and a curtain sheet device 30 is involved in a side collision or turns on its side, an actuator 37 and an inflator of the side air bag device 20 are activated. Consequently, a slider 36 moves along a guide rail 35, pushes down a rear portion of a rope 32, and stretches a curtain sheet 31. In a state in which the slider 36 is latched by a one-way clutch 38, the rope 32 is tightly stretched between the slider 36 and a rope anchor 33, and the curtain sheet 31 covers windows 22a and 23a of doors 23 and 23. A side air bag 21 is inflated beside a part between the hip and head of an occupant on a seat 10 (FIG 1).

## Description

The present invention relates to an occupant protection system that protects an occupant of a vehicle when the vehicle is involved in a side collision or turns on its side.

For example, side air bag devices and curtain air bag devices are known as occupant protection systems that protect an occupant by preventing the occupant from hitting a side door when a vehicle is involved in a side collision or turns on its side (for example, see JP-A-10-175499 (Patent Document 1) and JP-A-2000-62562 (Patent Document 2)). In this specification, the turning on the side includes rollovers.

An object of the present invention is to provide an occupant protection system that can effectively protect an occupant with a side air bag device and a curtain sheet, for example, in the event of a side collision or turning on the side and that can be stored in a reduced space of a vehicle.

An occupant protection system of the present invention includes a side air bag that is inflated beside an occupant of a vehicle, and a curtain sheet that is normally out of a position such as to cover a window beside a seat and that is stretched to cover the window from a cabin side of the vehicle in an emergency.

In the occupant protection system claimed in claim 2 according to claim 1, the side air bag is inflated beside at least a part between the hip and head of the occupant.

In the occupant protection system claimed in claim 3 according to claim 1 or 2, the curtain sheet is secured at an upper side to a chassis above the window, and is stretched to cover the window by being pulled at a lower side by a pulling means.

In the occupant protection system claimed in claim 4 according to claim 3, a linear member is mounted along the lower side of the curtain sheet, and is fixed at one end to the chassis, and the pulling means pulls the other end of the linear member.

In the occupant protection system claimed in claim 5 according to claim 3 or 4, the pulling means has a stopper means for preventing a retractive movement after pulling.

In the occupant protection system claimed in claim 6 according to any one of claims 1 to 5, the curtain sheet is placed between the side air bag and the window in a state in which the side air bag is completely inflated and the curtain sheet is completely stretched.

When a vehicle having the occupant protection system of the present invention is involved in a side collision or turns on its side, the curtain sheet is stretched along the window beside the seat, and the side air bag is inflated on a cabin side of the curtain sheet. The inflated side air bag receives the occupant, and absorbs an impact. Even when the window is open or broken, the curtain sheet prevents the side air bag from moving out of the window, and therefore, the impact can be absorbed sufficiently. The stretched curtain sheet also serves to retain the occupant inside the cabin of the vehicle.

The occupant protection system of the present invention does not adopt a curtain air bag device, but adopts the curtain sheet. This can make the storage space in the vehicle smaller than when the curtain air bag device is adopted.

In the occupant protection system of the present invention, it is preferable that the side air bag be inflated beside at least a part between the hip and head of the occupant. Such a side air bag receives almost the entire side portion of the body of the occupant sitting on the seat, and sufficiently protects the occupant.

In the present invention, the curtain sheet may be secured at the upper side to the chassis above the window, and may be stretched to cover the window by being pulled at the lower side by a pulling means. When the curtain sheet is thus pulled by the pulling means, it can be quickly stretched even when slipping on, for example, a pillar of the chassis.

In this case, it is preferable that a linear member be provided along the lower side of the curtain sheet, and be fixed at one end to the chassis, and the pulling means pulls the other end of the linear member. The linear member can stretch the curtain sheet so that the lower side has a sufficient tensile force (so that the lower side is tightly stretched).

When the pulling means has a stopper means for preventing a retractive movement after pulling, the stretched curtain sheet is held under high tension, and can extremely reliably receive the side air bag and the occupant for a long period.

Embodiments will be described below with reference to the drawings.
Figs. 1(a) and 1(b) are perspective views showing an embodiment;
Figs. 2(a) and 2(b) are perspective views showing another embodiment; and
Figs. 3(a) and 3(b) are perspective views showing a further embodiment.

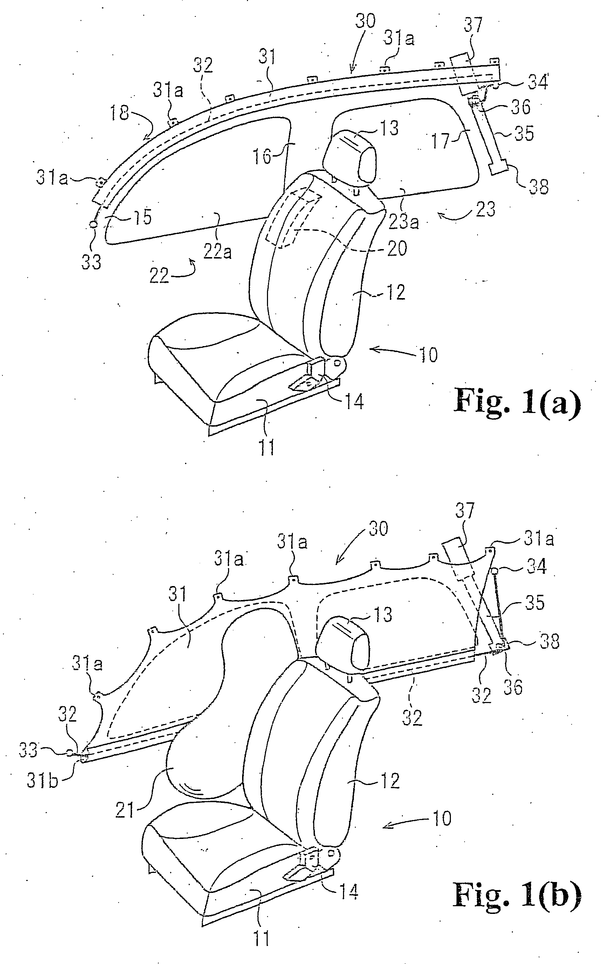

Figs. 1(a) and 1(b) are perspective views of a front seat in a car provided with an occupant protection system according to an embodiment, respectively, showing a state before a side air bag is inflated and a curtain sheet is stretched, and a state after the side air bag is inflated and the curtain sheet is stretched.

In Fig. 1, a seat 10 in the car includes a seat cushion 11, a seat back 12, and a headrest 13. Although not shown, a shoulder anchor is provided on a B-pillar 16, and a shoulder belt is hung on the shoulder anchor. The shoulder belt is attached to a buckle 14 via a tongue.

A side air bag device 20 including a side bag 21 that is inflated along a front door 22 and an inflator (not shown) for inflation is provided at the front door 22 or the seat 10 (the seat 10 in this embodiment).

A curtain sheet device 30 extends from an A-pillar 15 of the car to a C-pillar 17 through a roof side rail 18. In cases of a side collision and rolling, a curtain sheet 31 can be stretched between the A-pillar 15 and the C-pillar 17 to cover windows 22a and 23a of the front door 22 and a rear door 23.

The curtain sheet 31 is folded up in an elongated form, and is disposed along the roof side rail 18 while the form is retained by, for example, a breakable tape. The curtain sheet 31 is covered with a roof head lining (not shown).

A plurality of lugs 31a project from an upper side of the curtain sheet 31. The lugs 31a are fastened to the A-pillar 15 and the roof side rail 18 by, for example, bolts or rivets.

A lower side of the curtain sheet 31 is turned up and sewn to form a tunnel-shaped rope extending portion 31b. A rope 32 extends through the rope extending portion 31b. A front end of the rope 32 is connected to the bottom of the A-pillar 15 via a rope anchor 33, and a rear end thereof is connected to the top of the C-pillar 17 via a rope anchor 34. In this embodiment, the curtain sheet device 30 includes a guide rail 35 that is mounted on the C-pillar 17 to function as a pulling means for pulling the curtain sheet 31 downward and that extends vertically, a slider 36 that is slidable along the guide rail 35, an actuator 37 for moving the slider 36 by the action of the blow pressure of gas, and a one-way clutch 38 provided at the bottom of the guide rail 35. The actuator 37 includes a gas generator, and a multistage piston (not shown) that extends along the guide rail 35 by the blow pressure of gas from the gas generator. When the gas generator starts, the piston expands to push the slider 36, and the slider 36 moves along the guide rail 35. When the slider 36 reaches a lower end of the guide rail 35, it is latched by the one-way clutch 38, and is thereby prevented from retracting upward.

The rear end of the rope 32 drawn out of a rear end of the rope extending portion 31b is hung on the slider 36, and is then connected to the rope anchor 34.

When the car provided with the side air bag device 20 and the curtain sheet device 30 thus constructed is involved in a side collision or turns on its side, the actuator 37 and the inflator of the side air bag device 20 are activated. By the activation of the actuator 37, the slider 36 moves along the guide rail 35, and pushes down the rear portion of the rope 32, thereby stretching the curtain sheet 31, as shown in Fig. 1(b). The curtain sheet 31 pushes a side edge of the roof head lining open, and stretches downward along the cabin sides of the windows 22a and 23a. In a state in which the slider 36 is latched by the one-way clutch 28, the rope 31 is tightly stretched between the slider 36 and the rope anchor 33, and the curtain sheet 31 covers the windows 22a and 23a of the doors 22 and 23.

By the activation of the inflator of the side air bag device 20, the side air bag 21 is inflated beside a part between the hip and head of an occupant on the seat 10. While the side air bag 21 is inflated, it is placed on the cabin side of the stretched curtain sheet 31. Since the inflated side air bag 21 receives the occupant from the side, the impact applied to the occupant is absorbed.

Since the stretched curtain sheet 31 covers the windows 22a and 23a, even when the window glasses of the doors 22 and 23 are open or broken, the occupant remains inside the car. The stretched curtain sheet 31 also backs up the inflated side air bag 21, and prevents the side air bag 31 from moving toward the outside of the car.

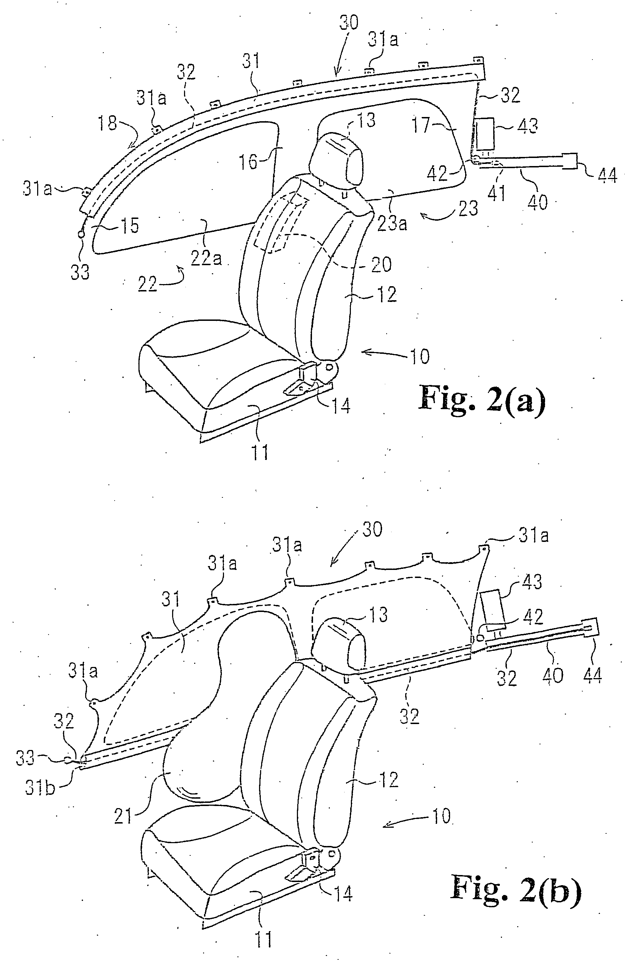

While the multistage actuator 37 using the gas generator as a driving power source is adopted in the above embodiment, a piston-shaped slider may be directly moved by the blow pressure of gas from the gas generator. Fig. 2 shows an example of such a method. A cylinder-shaped guide rail 40 extends in the front-rear direction of the vehicle body at the bottom of a C-pillar 17. A piston-shaped slider 41 is placed inside a guide rail 40. A rear end of a rope 32 is connected to the slider 41. At least the rear end of the rope 32 is resistant to heat. The rear end of the rope 32 is guided into the guide rail 40 by a sheave 42.

A front end of the guide rail 40 is closed by a head end plate. The head end plate has an insertion hole (not shown) through which the rope 32 is inserted. A gas generator 43 is connected to the guide rail 40 to supply gas between the head end plate and the slider 41. A one-way clutch 44 is provided at a rear end of the guide rail 40.

When the gas generator 43 is activated, the slider 41 moves rearward along the guide rail 40 until it is latched by the one-way clutch 44, as shown in Fig. 2(b). Consequently, the rope 32 is tightly stretched, and the curtain sheet 31 is stretched to cover windows 22a and 23a. A side air bag 20 operates in a manner similar to that in the above embodiment. In this embodiment, operative advantages similar to those in the above embodiment are provided.

While the guide rail 40 extends laterally in Fig. 2, it may extend vertically so that its end at the one-way clutch 44 is placed on the upper side.

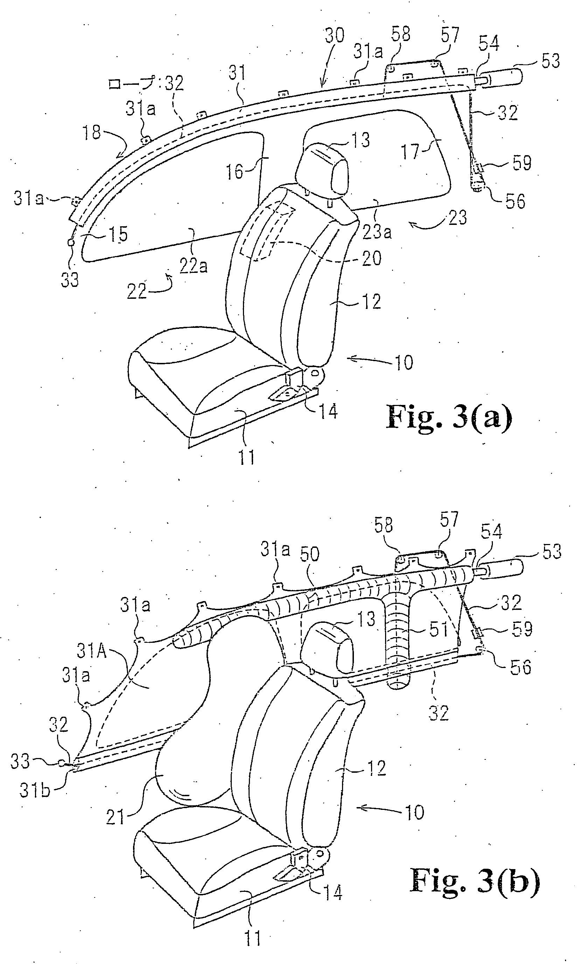

Fig. 3 shows an embodiment in which expandable chambers 50 and 51 are provided in a curtain sheet 31A, are inflated by the supply of gas from a gas generator 53, and a rope 32 is pulled by the force of inflation.

As shown in Fig. 3(b), the chamber 50 extends in the front-rear direction of the vehicle body along an upper side of the curtain sheet 31A. The gas generator 53 is connected to a rear end of the chamber 50 via a duct 54. The chamber 51 branches off from the chamber 50 at a longitudinal midpoint, extends down through almost the center of a window 23a, and reaches a lower side of the curtain sheet 31A.

Sheaves 56, 57, and 58 are provided at the bottom of the C-pillar 17 and in the rear of a roof side rail 18. A rope 32 extending from a rear end of a rope extending portion 31b is hung on the sheave 56, is hung on the sheaves 57 and 58 provided above the window 23a, and is guided into the chamber 51. The rope 32 extends inside the chamber 51, and is connected at the tail end to the curtain sheet 31A near the lower end of the chamber 51. A one-way rope clutch 59 is provided between the sheaves 56 and 57 to allow the rope 32 only to move from the sheave 56 to the sheave 57.

When the gas generator 53 is activated, gas blown from the gas generator 53 flows straight, and first inflates the chamber 50. A roof lining covering the curtain sheet 31A is thereby pushed open, and a space is formed between the roof lining and a side portion of the vehicle body. The gas flows from the chamber 50 into the chamber 51, and the chamber 50 expands downward through the space. A portion of the curtain sheet 31A adjoining the chamber 51 also stretches downward through the space while being dragged by the chamber 51. With the downward expansion of the chamber 51, the tail end of the rope 32 is pulled downward, and the entire curtain sheet 31A is stretched downward through the space. Finally, a stretch finished state shown in Fig. 3(b) is brought about, and the curtain sheet 31A covers the windows 22a and 23a. In this state, the rope 32 is latched by the rope clutch 59, and is held under high tension.

Other structures in Fig. 3 are similar to those in the above embodiments, and the same reference numerals denote the same components.

This embodiment provides operational advantages similar to those in the above embodiments. This embodiment is also advantageous in that the chamber 51 receives the head of an occupant on a rear seat and absorbs an impact.

The above embodiments are exemplary embodiments of the present invention, and the present invention also includes embodiments other than the illustrated embodiments. For example, a wire, a belt, a soft resin rod, or a tube may be used as a linear member, instead of the rope. The pulling means is not limited to the means using the gas generator as a power source, and, for example, a motor and a linear solenoid may be used as the power source.

## Claims

1. An occupant protection system comprising:
a side air bag that is inflated beside an occupant of a vehicle; and
a curtain sheet that is normally out of a position such as to cover a window disposed beside a seat and that is stretched to cover the window from a cabin side of the vehicle in an emergency.

2. The occupant protection system according to claim 1, wherein the side air bag is inflated beside at least a part between the hip and head of the occupant.

3. The occupant protection system according to claim 1 or 2, wherein the curtain sheet is secured at an upper side to a chassis above the window, and is stretched to cover the window by being pulled at a lower side by pulling means.

4. The occupant protection system according to claim 3, wherein a linear member is mounted along the lower side of the curtain sheet, and is fixed at one end to the chassis, and the pulling means pulls the other end of the linear member.

5. The occupant protection system according to claim 3 or 4, wherein the pulling means has stopper means for preventing a retractive movement after pulling.

6. The occupant protection system according to any one of claims 1 to 5, wherein the curtain sheet is placed between the side air bag and the window in a state in which the side air bag is completely inflated and the curtain sheet is completely stretched.
